(19) Europäisches Patentamt
European Patent Office
Office européen des brevets

(11) **EP 2 793 402 A1**

(12) **EUROPÄISCHE PATENTANMELDUNG**

(43) Veröffentlichungstag:
**22.10.2014 Patentblatt 2014/43**

(51) Int Cl.:
*H04B 3/28* (2006.01)  *H04B 3/30* (2006.01)

(21) Anmeldenummer: **13002060.5**

(22) Anmeldetag: **19.04.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Sroka, Jan**
**4528 Zuchwil (CH)**

(72) Erfinder: **Sroka, Jan**
**4528 Zuchwil (CH)**

(54) **Vorrichtung zur Kompensation des magnetischen Gleichtaktflusses einer Mehrdrahtleitung**

(57) Die Erfindung betrifft eine Vorrichtung zur Kompensation des Gleichtaktflusses einer Mehrdrahtleitung mit spannungsführenden Leitungen (1 ÷ k) und einer Rückleitung (k+1). Jede der spannungsführenden Leitungen (1 ÷ k) ist um jeweils genau einen Magnetkern gewickelt. Die Rückleitung (k+1) ist um jeden der Magnetkerne gewickelt. Durch geeignete Wahl der Anzahl an Windungen der spannungsführenden Leitungen und der Rückleitung ist eine Unterdrückung der Gegentaktstörungen mit zugleich intakter Gleichtaktstörung erreichbar.

Mögliche Einsatzgebiete liegen im Bereich der Unterdrücker, Koppler, Entkoppler und Messeinrichtungen von Störungen, um Anforderungen an die elektromagnetische Verträglichkeit (EMV) gerecht zu werden.

Abb. 5

EP 2 793 402 A1

**Beschreibung**

**Gegenstand und technisches Gebiet**

Die Erfindung betrifft die selektive Unterdrückung von Gegentakströmen beliebiger Mehrdrahtleitung, im Frequenzbereich von 3kHz bis 300MHz was folgenden Frequenzbänder abdeckt: *very low frequency* (VLF), *low frequency* (LF), *medium frequency* (MF), *high frequency* (HF) und *very high frequency* (VHF).

**Darlegung der Erfindung**

*Die Definitionen und die Grundlage*

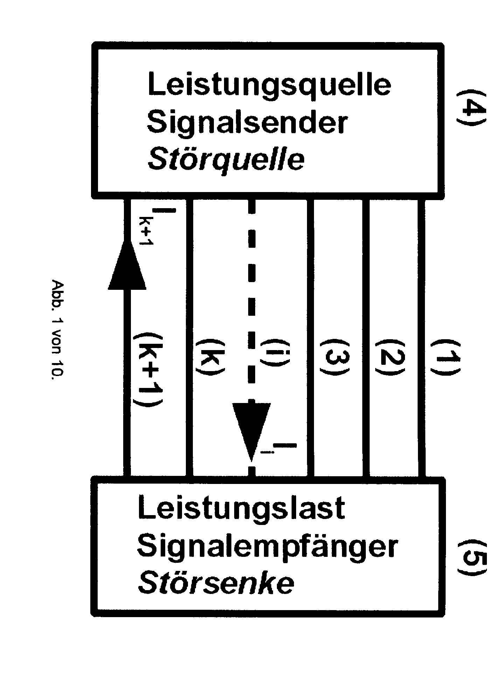

Lieferung der elektrischen Energie von der Leistungsquelle (4) in Abb. 1 zur Last (5) in Abb. 1 oder Übertragung der Signale vom Signalsender (4) in Abb. 1 zum Signalempfänger (5) in Abb. 1 über eine Mehrdrahtleitung (1), (2), (3), ..., (i) ,..., (k), (k+1) in Abb. 1 ist immer von der Störungsausbreitung begleitet. In Elektromagnetischer Verträglichkeit (EMV) spricht man von leitungsgebundener Störaussendung von der Störquelle (4) in Abb. 1 zu der Störsenke (5) in Abb. 1.

In einer Mehrdrahtleitung (1), (2), (3), ..., (i) ,..., (k), (k+1) in Abb. 1 die "k" Drähte mit Nummern (1), (2), (3), (i) ,..., (k) sind spannungsführend. Der Draht mit der Nummer k+1, Rückleitung benannt, ist spannungslos. Er dient dem Potenzialausgleich, der elektrischen Sicherheit oder der Zuverlässigkeit. Es kann entweder: Neutralleitung im Dreiphasen Speisungssystem oder Schutzleitung (*Protective Earth* PE) oder Signalerde (*Ground* GND) bei Signalübertragung, absichtlich spannungslos gelassene Drähte in einem Signalflachbandkabel, Kabelschirm oder Kabel Stahllitze etc. sein. Es gibt auch Mehrdrahtleitungen ohne Rückleitung. In solchen Fällen wirkt die Erde oder metallische Referenzplatte (*Ground Reference Plate* GRP) in der Laborumwelt als die Rückleitung. Störstrom in jedem spannungsführenden Draht "i" kann in zwei Komponenten zerlegt werden: Gegentakt $I_i^{(DM)}$ und Gleichtakt $I^{(CM)}$ auf Englisch *Differential Mode* (DM) und *Common Mode* (CM) benannt

$$I_i = I_i^{(DM)} + I^{(CM)} \qquad (1)$$

Der Gleichtaktstrom ist in jedem Draht "i" gleich und fliesst zurück zur Störquelle in der Rückleitung. Deshalb ist der Strom in der Rückleitung der k-fache Gleichtaktstrom

$$I_{k+1} = k \cdot I^{(CM)} \qquad (2)$$

Die Gegentaktströme fliessen nicht über die Rückleitung. Deshalb ist ihre Summe über allen spannungsführenden Drähten gleich Null

$$\sum_{i=1}^{k} I_i^{(DM)} = 0 \qquad (3)$$

*Stand der Technik*

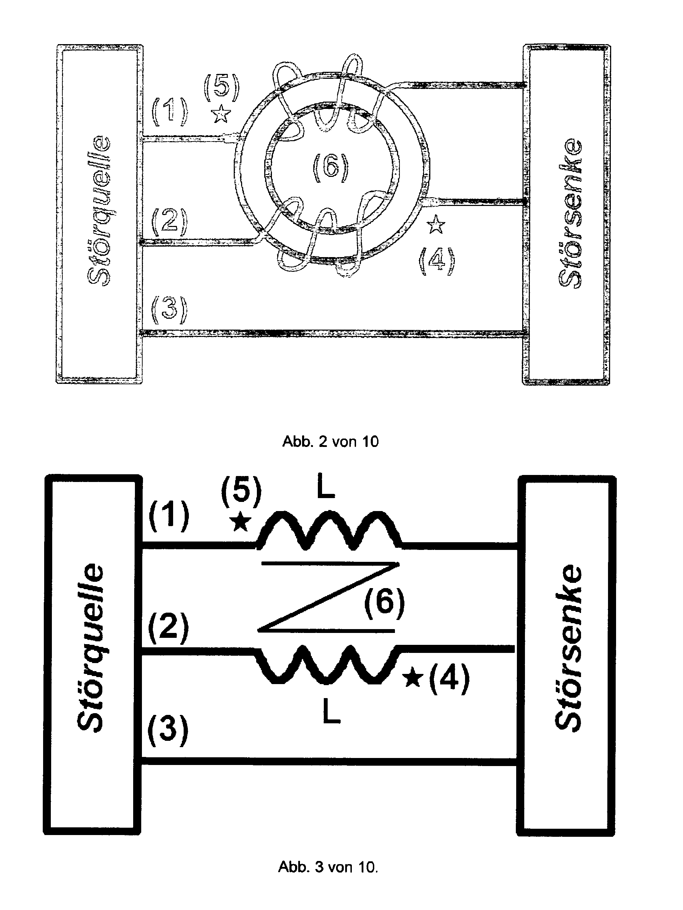

Ein magnetischer Kreis mit kompensiertem Gleichtaktfluss ist bis daraufhin nur für die Dreidrahtleitung mit zwei spannungsführenden Drähte (1) und (2) und einer Rückleitung (3) wie in Abb. 2 gezeigt bekannt. Die spannungsführenden Drähte sind an dem gemeinsamen Magnetkern (6) in Abb. 2 gegensinnig mit gleicher Anzahl "n" der Windungen gewickelt. In Abb. 2 sind das drei Windungen (n=3). Die Sterne (4) und (5) in Abb. 2 sind die Bezugszeichen der Wicklungen. Die Magnetflüsse der beiden Wicklungen vom Gleichtaktstrom heben sich in Magnetkern (6) auf, dagegen die vom Gegentaktstrom addieren sich. Mit Vernachlässigung der Streuflüsse, ist der resultierende Magnetfluss im Kern (6) nur von dem Gegentaktstrom bestimmt.

Das gleiche kann man mittels Induktivitäten erklären. Das elektrische Schema solches Kreises ist in Abb. 3 dargestellt. L bezeichnet die Selbstinduktivitäten der Wicklungen. Der Buchstabe "Z" (6) bezeichnet den Magnetkern. Mit Vernachlässigung der Streuinduktivitäten ist die Induktivität für den Gegentaktstrom gleich der vierfachen Selbstinduktivität L und für den Gleichtaktstrom gleich Null.

### *Nachteile*

Magnetische Kreise mit kompensiertem Gleitaktfluss einer Mehrdrahtleitung mit Anzahl der spannungsführenden Drähten grösser als zwei wurden bis jetzt nicht erfunden.

### *Aufgabe*

Erfindung der magnetischen Kreise in denen der Gleichtaktfluss einer Mehrdrahtleitung mit beliebiger Anzahl Drähte kompensiert ist, damit nur die Gegentaktflüsse in diesen magnetischen Kreisen vorhanden sind.
Diese Aufgabe wurde gelöst mit einer Vorrichtung nach dem Patentanspruch.

### *Lösung*

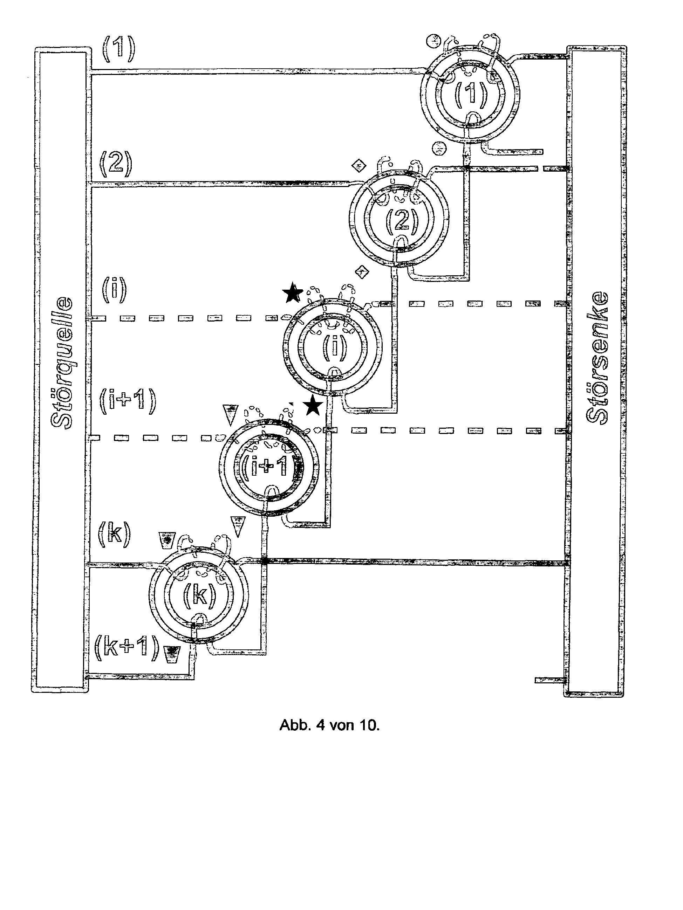

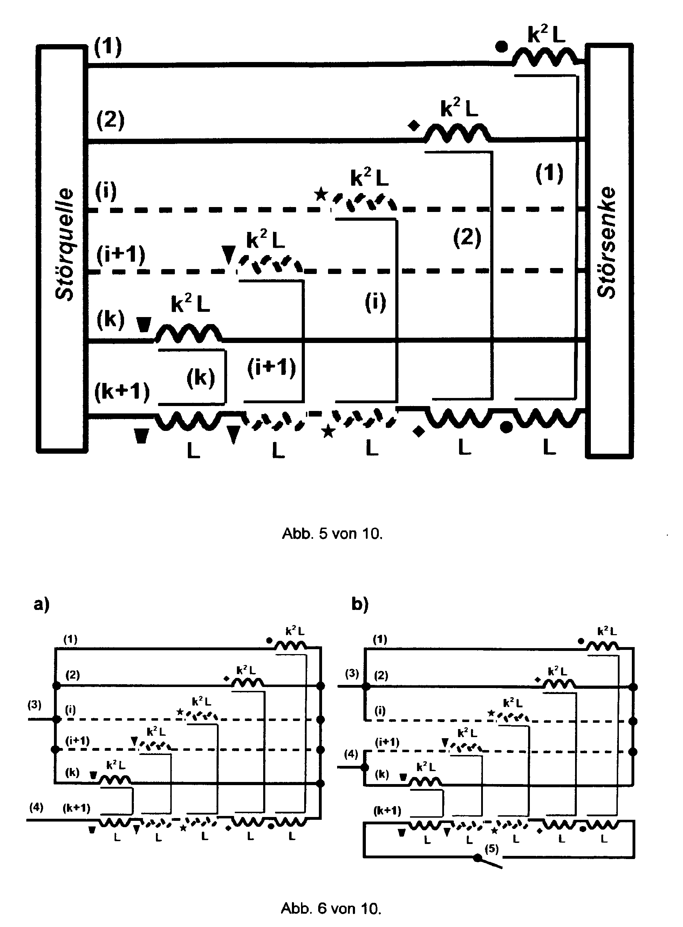

Für eine Mehrdrahtleitung mit beliebig grosser Anzahl "k" der spannungsführenden Drähte, nehme man "k" identischen Magnetkerne beliebiger Körperform: Stab, Toroid etc. In der Abb. 4 sind die Kerne mit der Toroid Körperform gezeigt.
An jedem Kern (1), (2),...,(i), (i+1),..., (k) ist die Rückleitung gleichsinnig mit "n" Windungen gewickelt. In Abb. 4 ist das mit einer Windung realisiert (n=1). Jeder spannungsführende Draht (1), (2),...,(i), (i+1),..., (k) ist separat an entsprechendem Kern (1), (2),...,(i), (i+1),..., (k) mit "k+n" Windungen gleichsinnig mit der Rückleitung wie in der Abb. 4 gezeigt, gewickelt. Das bildet "k" gekoppelte magnetische Kreise. Die Bezugszeichen der gekoppelten Wicklungen sind in Abb. 4 mit: Kreise für Draht (1) und die Rückleitung, Rhomben für Draht (2) und die Rückleitung, Sterne für Draht (i) und die Rückleitung, Dreiecke für Draht (i+1) und die Rückleitung, und Trapeze für Draht (k) und die Rückleitung bezeichnet.
Magnetischer Fluss vom Gleichtaktstrom ist in jedem Kern (1), (2),...,(i), (i+1),..., (k) dank dem Verhältnis zwischen Anzahl Windungen des spannungsführenden Drahtes und der Rückleitung (k/1) und dem Verhältnis des Gleichtaktstromes und des Stromes in der Rückleitung (1/k) (siehe Gl. (2)) kompensiert. Mit Vernachlässigung der Streuflüsse ist der resultierende Magnetfluss in jedem Kern "i" nur von eigenem Gegentaktstrom bestimmt.
Das gleiche kann man mit der in der Abb. 5 dargestellten Schaltung, erklären.
In der Rückleitung sind "k" nicht gekoppelte Spulen, jede mit Induktivität L, in Serie geschaltet.Somit beträgt die summarische Hauptinduktivität in der Rückleitung k*L. In jedem spannungsführenden Draht ist eine Spule mit Induktivität $k^2$*L (Abb.5).
Jeder Magnetkern gewährleistet die Kopplung zwischen der Induktivität in einem spannungsführenden Draht und einer Induktivität in der Rückleitung. Diese Kopplung ist in Abb. 5 mit dem Symbol der eckigen Klammer "]" (1), (2),...,(i), (i+1),..., (k) bezeichnet. Die Bezugszeichen der gekoppelten Wicklungen sind in Abb. 5 mit: Kreisen für Draht (1) und die Rückleitung, Rhomben für Draht (2) und die Rückleitung, Sternen für Draht (i) und die Rückleitung, Dreiecken für Draht (i+1) und die Rückleitung, und Trapezen für Draht (k) und die Rückleitung bezeichnet.
Die Ersatzschaltung aller spannungsführenden Drähte 1, 2,...,i, i+1,..., k für den Gleichtaktstrom ist ein Zweig mit der Induktivität k.L (parallele Schaltung von "k" Zweigen, jeder mit der Induktivität $k^2$*L). Die Gegeninduktivität zwischen der Rückleitung und Ersatzschaltung aller spannungsführenden Drähte 1, 2,...,i, i+1,..., k ist gleich M = - 2*k*L. Somit ist die Induktivität der ganzen Schaltung für den Gleichtaktstrom gleich Null. Diese Behauptung kann mit Messung der Gleichtaktinduktivität in der in Abb. 6,a) gezeigten Schaltung verifiziert werden. Induktivität gemessen zwischen Endungen (3) und (4) in Abb. 6,a) ist die Gleichtaktinduktivität der erfundenen magnetischen Kreise. Die Messungen, vom Verfasser gemacht für eine Vier- und Fünf-drahtleitung, haben Null Resultat-gegeben, was die Behauptung bestätigt.
Die Gegentaktströme haben keinen Einfluss auf den Strom in der Rückleitung, weil ihre Summe gleich Null ist (Gl. (3)). Diese Behauptung kann mit Messung in der in Abb. 6,b) gezeigten Schaltung verifiziert werden. Die spannungsführenden Drähte können beliebig in zwei Teile gruppiert und zusammen gebunden werden. Die Drähte mit Nummern von (1) bis (i) in Abb. 6,b) sind zu der Endung (3) und die Drähte mit Nummern von (i+1) bis (k) in Abb. 6,b) sind zu der Endung (4) angeschlossen. Die Induktivität gemessen zwischen Endungen (3) und (4) in Abb. 6,b) ist unabhängig davon, ob der Schalter (5) in der Rückleitung offen oder geschlossen ist (ON/OFF). Die Messungen vom Verfasser gemacht für eine Vier- und Fünf-drahtleitung haben das gleiche Resultat gegeben, unabhängig davon in welcher Position (ON/OFF) der Schalter (5) war. Das bestätigt die Behauptung, dass die Induktivität zwischen Endungen (3) und (4) reine Gegentaktinduktivität ist.

*Vorteile*

Magnetische Kreise mit kompensiertem Gleitaktfluss einer Mehrdrahtleitung mit beliebiger Anzahl der Spannungsfrühenden Drähten wurden erfunden.

*Ausführung der Erfindung*

Die Erfindung kann im Gebiet der Elektromagnetischen Verträglichkeit (EMV) für selektive Unterdrückung als auch für Messung der Gegentaktstörströme in beliebiger Mehrdrahtleitung eingesetzt werden.

Die Anordnung in Abb. 5 dargelegt, kann direkt als eine Stufe eines Radiofrequenten (RF) Unterdrückungsfilters gebraucht werden.

Für die Anordnung von Abb. 5 nehme man als Magnetkemen die Strommesszangen, kann man damit den Gegentaktstrom im jedem spannungsführenden Draht messen.

Darüber hinaus finden die erfundenen magnetische Kreise überall Einsatz, wo eine Separierung der Gegentaktströme vom Gleichtaktstrom notwendig ist, z.B.:

1. RF Filter für *Power Line Communication* (PLC), *High-speed PLC, Broadband* PLC, nach der Normen: CISPR 22, EN 55022 (IEC 55022),
2. *Smart Metering* (SM) und *Smart Grid* (SG) Technologie und Systeme
3. Sonden für Messung der *Longitudinal Conversion* Loss (LCL) nach Normen: EN 55022 (IEC 55022) und CISPR 16-1-2
4. Koppelschaltungen für Emissionsmessungen und Immunitätsprüfungen des Signalkabels nach Normen: CISPR 22, EN 55022, IEC 55022, EN 61000-4-6, EN 55024 (IEC 61000-4-6, IEC 55024) und EN61000-4-16.

Die letzte Anwendung ist im Folgenden im Detail erläutert.Bei der Messung der leitungsgebundenen Emission in den Signalkabeln ist es notwendig, den Gegentaktstrom zu separieren. Die Messung nach den Normen CISPR 22, EN 55022, IEC 55022 ist mit der assymetrischen Netznachbildung auf Englisch *Asymmetric Artificial Netuvork* (AAN) oder *Impedance Stabilization Network* (ISN) Typ Tx gemacht. Mit "x" ist die Anzahl der spannungsführenden Drähte gemeint. Gleiche Situation ist bei Störfestigkeitsmessung gegen Störungen die sich durch RF Feldern in Signalkabeln induzieren. Entsprechende Normen sind EN 61000-4-6, EN 55024, (IEC 61000-4-6, IEC 55024), EN61000-4-16. Zu dieser Prüfung sind Koppel-Entkoppelnetzwerke *Coupling Decoupling Networks* (CDN) Typ Sx gebraucht. Hier wieder mit "x" ist die Anzahl der spannungsführenden Drähte gemeint.

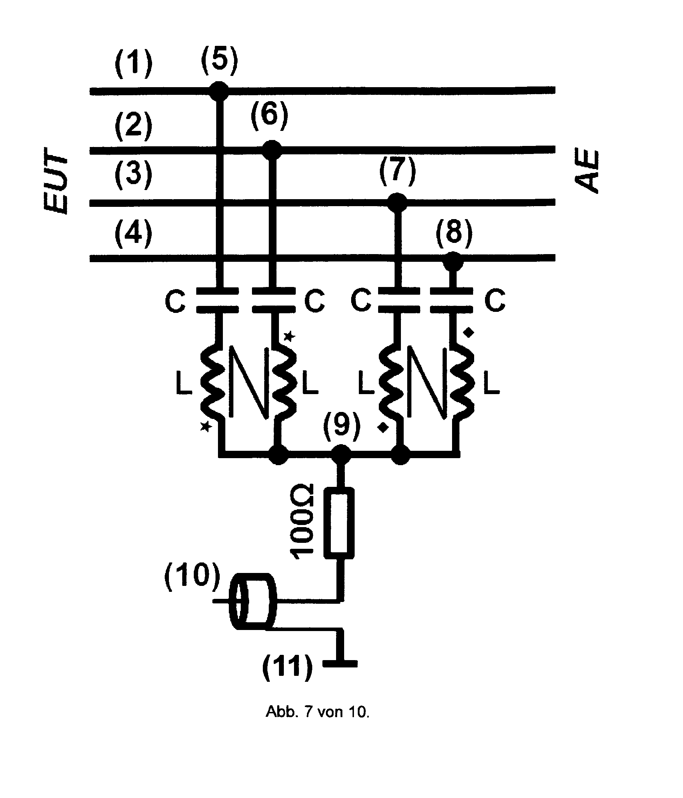

Beispiel der Kopplungsschaltung in ISN-T4 oder CDN-S4 ist in Abb. 7 gezeigt. Zwei Paare der nicht abgeschirmten Drähte (1) - (2) und (3) - (4) übertragen die Nutzsignale zwischen dem Prüfling (EUT) und dem Zusatzgerät auf Englisch *Auxiliary Equipment* (AE) benannt. Das Gleichtaktsignal ist in den Knoten (5), (6), (7) und (8) mit der Kopplungszweigen zwischen Knoten (5) - (9), (6) - (9), (7) - (9) und (8) - (9) angefasst. In jedem Kopplungszweig ist ein Koppelkondenser C gebaut. Der Gleichtaktzweig zwischen dem Knoten (9) und Massenfläche (11) (*ground reference*) hat 150Ω Widerstand. In ISN und CDN ist nur 100Ω Widerstand eingebaut. Die fehlende 50Ω Widerstand ist durch die Eingangswiederstand des Messempfängers im Fall ISN und durch die Ausgangswiederstand des Prüfgenerators im Fall CDN der zu dem Koaxialanschluss (10) angeschlossen ist, gewährleistet.

Impedanz zwischen Anfassungsknoten (5) - (6) und (7) - (8) darf durch die Kopplungsschaltung nicht verändert werden. Andernfalls werden die Nutzsignale auf dem Weg von EUT zu AE zusätzlich belastet und somit wird ihre Integrität verdorben. Es ist die typische Situation eines Dreitors (EUT, AE und (10) in Abb. 7) in dem das Gleichtaktsignal mit einem Pfad (EUT-(10)) extrahiert werden muss und das Gegentaktsignal im anderen Pfad (EUT-AE) nicht beeinflusst werden darf. In Abb. 7 ist diese Separierung mittels zwei Gegentaktdrosseln wie in Abb. 3 erläutert realisiert. Bezugszeichen der Wicklungen sind mit Sternen und Rhomben bezeichnet. Der gekippte Buchstabe "Z" bezeichnet magnetische Kopplung. Eine solche Lösung kann nicht angewendet werden, wenn die Anzahl der spannungsführenden Drähte ungerade ist. Anderer Nachteil dieser Lösung ist die Gegentaktinduktivität, die zwischen Knoten z.B. (5) -(9) - (6) und (7) - (9) -(8) 4*L beträgt und zwischen den Knoten (6) - (9) - (7) nur 2*L. Das verursacht unerwünschte Konvertierung des Gegentakts zu Gleichtakt. Der erfundene Satz der Gegentaktdrosseln in Abb. 4 und 5 erläutert ist von diesen Nachteilen befreit.

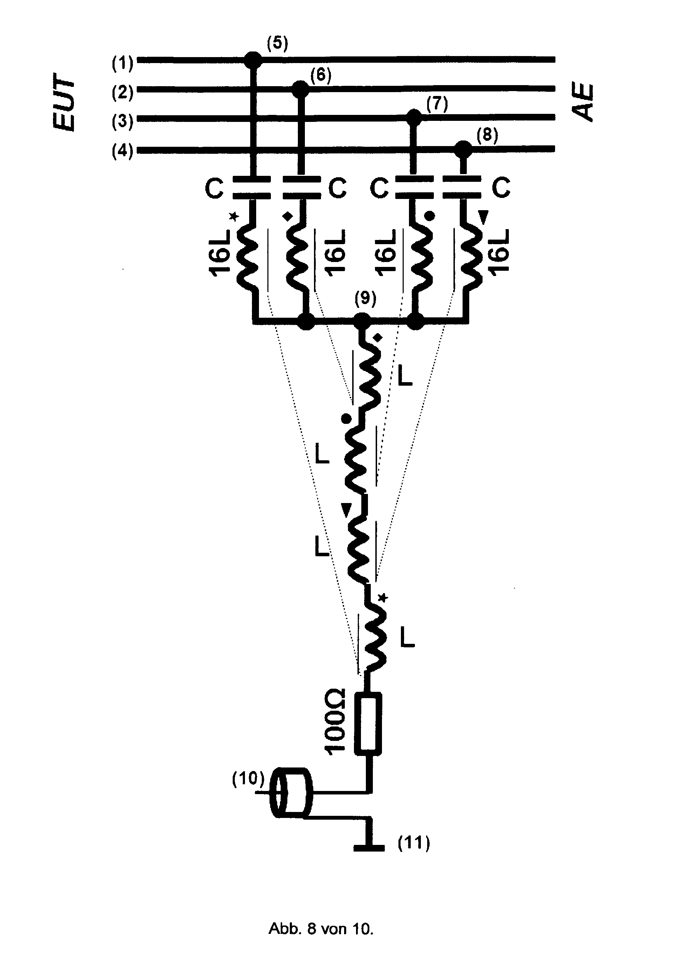

Anwendung dieser Erfindung in ISN-T4 und CDN-S4 ist in Abb. 8 dargelegt.

Die Bezugszeichen der gekoppelten Wicklungen sind mit: Sterne für den Kopplungszweig (5) - (9) und Gleichtaktzweig (9) - (11), Rhomben für den Kopplungszweig (6) - (9) und Gleichtaktzweig (9) - (11), Kreise für den Kopplungszweig (7) - (9) und Gleichtaktzweig (9) - (11) und Dreiecke für den Kopplungszweig (8) - (9) und Gleichtaktzweig (9) - (11) bezeichnet. Verhältnis der Induktivitäten beträgt $4^2/1 = 16$.

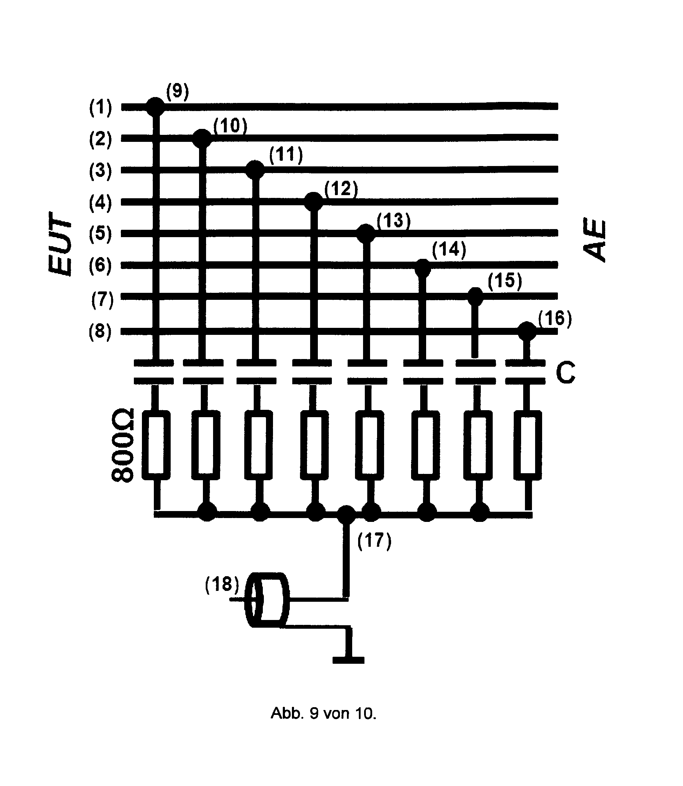

In Abb. 9 ist die Kopplungsschaltung einer ISN-T8 oder CDN-S8 dargestellt. Die Drähte von (1) bis (8) übertragen die Signale von EUT zu AE. Diese Schaltung hat acht Kopplungszweige (9) - (17), (10) - (17), (11) - (17), (12) - (17),

EP 2 793 402 A1

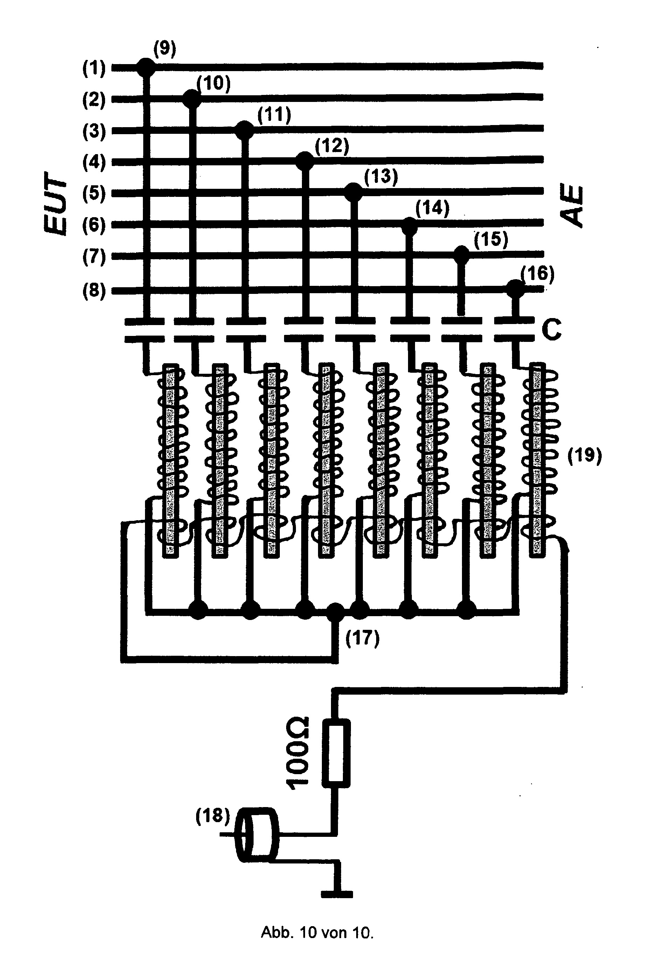

(13) - (17), (14) - (17), (15) - (17) und (16) - (17). Jeder Kopplungszweig besteht aus Koppelkondensator C und 800Ω Widerstand, was 100Ω Gleichtaktwiderstand gibt. Diese Widerstände wirken auch als Unterdrücker der Gegentaktströme. Alternativ können die erfundene Magnetische Kreise mit kompensiertem Gleichtaktfluss wie in Abb. 10 dargestellt verwendet werden. Die Drosseln sind gewickelt an den Stabkemen. An jedem Kern sind acht Windungen des Koppelzweigs und eine Windung des Gleichtaktzweigs. Verhältnis der Induktivitäten beträgt $8^2/1=64$.

## *Aufzählung der Zeichnungen*

| | |
|---|---|
| Abb. 1. | Die Mehrdrahtleitung zwischen Leistungsquelle und der Last, Signalsender und Signalempfänger oder Störquelle und Störsenke mit k spannungsführenden Drähten und einer k+1 Rückleitung. |
| Abb. 2. | Magnetischer Kreis mit kompensiertem Gleitaktfluss einer Dreidrahtleitung. |
| Abb. 3. | Äquivalente Schaltung des magnetischen Kreises mit kompensiertem Gleitaktfluss einer Dreidrahtleitung von der Abb. 2. |
| Abb. 4. | Erfundene magnetische Kreise mit kompensiertem Gleichtaktfluss einer Mehrdrahtleitung mit beliebiger, gerader oder ungerader Zahl 1, 2,...,i, i+1,..., k der spannungsführenden Drähte. |
| Abb. 5. | Äquivalente Schaltung der magnetischen Kreise mit kompensiertem Gleichtaktfluss einer Mehrdrahtleitung mit beliebiger, geraden oder ungeraden Zahl 1, 2,...,i, i+1,..., k der spannungsführenden Drähten. |
| Abb. 6. | Schaltungen für Messung der Gleichtakt- a) und Gegentakt- b) Induktivitäten der-erfundenen magnetischen Kreise mit kompensiertem Gleichtaktfluss. |
| Abb. 7. | Kopplungsschaltung der ISN-T4 und CDN-S4, Stand der Technik. |
| Abb. 8. | Kopplungsschaltung der ISN-T4 und CDN-S4 mit Anwendung der erfundenen magnetischen Kreise mit kompensiertem Gleichtaktfluss. |
| Abb. 9. | Kopplungsschaltung der ISN-T8 und CDN-S8, Stand der Technik. |
| Abb. 10. | Kopplungsschaltung der ISN-T8 und CDN-S8 mit Anwendung der erfundenen magnetischen Kreise mit kompensiertem Gleichtaktfluss. |

## Patentansprüche

**1.** Vorrichtung zur Kompensation des magnetischen Gleichtaktflusses einer Mehrdrahtleitung mit einer Anzahl "k" von spannungsführenden Leitungen und einer Rückleitung, **dadurch gekennzeichnet, dass** jede der "k" Leitungen um jeweils einen von "k" magnetischen Kernen mit "n" mal "k" Windungen gewickelt ist und dass die Rückleitung um jeden der "k" magnetischen Kerne mit jeweils "n" Windungen gleichsinnig gewickelt ist.

**2.** Vorrichtung zur separaten Unterdrückung der Gegentaktströme einer Mehrdrahtleitung nach Anspruch 1 **dadurch gekennzeichnet, dass** Gegentaktströme unverändert bleiben.

**3.** Messinstrument zur Messung der Gegentaktströme einer Mehrdrahtleitung nach Anspruch 1 **dadurch gekennzeichnet, dass** die Strommesszangen als die magnetischen Kernen verwendet sind.

**4.** Vorrichtung zur Einspritzung der Gleichtaktstörung in einer Mehrdrahtleitung mit einer Anzahl "k" von spannungsführenden Leitungen und einer Rückleitung, **dadurch gekennzeichnet, dass** die Gleichtaktstörung unvermindert in die Mehrdrahtleitung eingespritzt werden kann, wobei die Gegentaktsignale in der Mehrdrahtleitung unverändert bleiben.

**5.** Vorrichtung zur Messung der Gleichtaktstörung in einer Mehrdrahtleitung mit einer Anzahl "k" von spannungsführenden Leitungen und einer Rückleitung, **dadurch gekennzeichnet, dass** die Gleichtaktstörung unvermindert in den Messtor abgeleitet werden kann, wobei die Gegentaktsignale in der Mehrdrahtleitung unverändert bleiben.

**(4)**  **(5)**  **(1)**  **(2)**  **(3)**

Leistungsquelle
Signalsender
*Störquelle*

Leistungslast
Signalempfänger
*Störsenke*

(i)  $I_i$

(k)

$I_{k+1}$  (k+1)

Abb. 1 von 10.

Abb. 2 von 10

Abb. 3 von 10.

Abb. 4 von 10.

Abb. 5 von 10.

Abb. 6 von 10.

Abb. 7 von 10.

Abb. 8 von 10.

Abb. 9 von 10.

Abb. 10 von 10.

**Europäisches Patentamt**
**European Patent Office**
**Office européen des brevets**

## EUROPÄISCHER RECHERCHENBERICHT

Nummer der Anmeldung

EP 13 00 2060

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| E | CH 705 768 B1 (SROKA JAN [CH]) 31. Mai 2013 (2013-05-31) * das ganze Dokument * ----- | 1-5 | INV. H04B3/28 H04B3/30 |
| X | GB 2 366 170 A (NEC CORP [JP]) 27. Februar 2002 (2002-02-27) * Absätze [0182] - [0187] * ----- | 1-5 | |

RECHERCHIERTE SACHGEBIETE (IPC)

H04B
H04L
H01F

Der vorliegende Recherchenbericht wurde für alle Patentansprüche erstellt

| Recherchenort | Abschlußdatum der Recherche | Prüfer |
|---|---|---|
| Den Haag | 20. September 2013 | De Iulis, M |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 13 00 2060

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-09-2013

| Im Recherchenbericht angeführtes Patentdokument | Datum der Veröffentlichung | Mitglied(er) der Patentfamilie | Datum der Veröffentlichung |
|---|---|---|---|
| CH 705768 B1 | 31-05-2013 | KEINE | |
| GB 2366170 A | 27-02-2002 | AU 776404 B2 | 09-09-2004 |
| | | AU 4604201 A | 03-01-2002 |
| | | GB 2366170 A | 27-02-2002 |
| | | JP 3654136 B2 | 02-06-2005 |
| | | JP 2001326493 A | 22-11-2001 |
| | | US 2002117318 A1 | 29-08-2002 |

EPO FORM P0461

Für nähere Einzelheiten zu diesem Anhang : siehe Amtsblatt des Europäischen Patentamts, Nr.12/82